# FASCICULE DE BREVET EUROPEEN

(11) **EP 1 597 523 B1**
(45) Date de publication et mention de la délivrance du brevet: **26.07.2017**
(21) Numéro de dépôt: 04714819.2
(22) Date de dépôt: 26.02.2004
(51) Int. Cl.: F24F 11/00

(54) **SYSTEME DE VENTILATION D'UN BATIMENT**
BELÜFTUNSSYSTEM EINES GEBÄUDES
BUILDING VENTILATION SYSTEM

(30) Priorité: 26.02.2003 FR 0302359
(43) Date de publication de la demande: 23.11.2005
(73) Titulaire: Astato, 93150 Le Blanc Mesnil (FR)
(72) Inventeur: AMPHOUX, André, F-75012 Paris (FR); KRIKORIAN, Olivier, 2285 ES Rijswijk (NL)
(74) Mandataire: Derambure, Christian
(86) Numéro de dépôt international: PCT/FR2004/000437
(87) Numéro de publication internationale: WO 2004/076932

(56) Documents cités:
- DE-A- 4 333 195
- US-A- 5 634 346
- US-A1- 2002 014 538
- US-B1- 6 241 604
- US-B1- 6 375 563
- US-B1- 6 415 984

## Description

L'invention concerne un système de ventilation comprenant un ventilateur d'air primaire destiné à alimenter un réseau disposant à ses extrémités de buses d'induction équipant des conduits verticaux de ventilation ou d'évacuation de produits de combustion.

Les buses d'induction situées en partie haute des extrémités des conduits permettent, par l'injection d'un débit sous haute vitesse, de créer une dépression en partie supérieure, mettant ainsi en mouvement ascensionnel un débit d'air secondaire dans le conduit. Le procédé peut également s'appliquer à des conduits horizontaux.
La turbine du ventilateur, contrairement aux installations classiques, n'est pas en contact direct avec le flux d'air à évacuer.
De tels systèmes de ventilation comprenant des buses d'induction sont par exemple décrit dans les documents EP-A-0 878 672 et EP-A-0 329 498.
On connaît déjà des systèmes de ventilation de bâtiments comprenant plusieurs pièces tels que des immeubles de bureaux ou d'habitat collectif.

De tels systèmes permettent un renouvellement de l'air des différentes pièces du bâtiment.
Il est possible de modifier l'intensité de la ventilation notamment par le maniement d'un variateur d'intensité, souvent réalisé sous la forme d'un variateur de fréquence du courant d'alimentation du moteur d'entraînement du ventilateur.

Toutefois, une telle modification nécessite une intervention humaine et est liée à une appréciation empirique du besoin de régler la ventilation.
Certains paramètres influant sur l'intensité nécessaire de la ventilation ne sont pas pris en compte par les systèmes classiques.
En effet, pour des conditions de ventilation optimales, le déposant a constaté qu'il convenait de prendre en compte la température extérieure et la vitesse du vent.

Les exigences de ventilation ne sont pas les mêmes en cas de basse température avec un vent fort qu'en cas de fortes températures en l'absence de vent.
D'autres paramètres peuvent également être pris en compte comme la présence de polluants (composition de l'air intérieur), présence ou absence d'individus...
On connaît également des procédés de réglage de système de ventilation permettant de modifier l'intensité de ventilation. Les documents US-6 241 604 et US-6 375 563 décrivent de tels procédés.
Cependant, les procédés décrit dans ces documents s'appliquent à des systèmes dans lesquels la turbine est en contact direct avec le flux d'air à évacuer. De plus, les paramètres pris en compte n'incluent pas la vitesse du vent qui est pourtant un critère déterminant pour obtenir un réglage efficace.

Le but de l'invention est de proposer un système de réglage permettant de remédier à certains des inconvénients précités en proposant un réglage automatisé de la ventilation du bâtiment.

A cet effet et selon un premier aspect, l'invention concerne un système de ventilation comprenant un ventilateur d'air primaire destiné à alimenter un réseau disposant à ses extrémités de buses d'induction équipant des conduits verticaux de ventilation ou d'évacuation de produits de combustion, ledit système comprenant en outre un module de commande et un variateur de fréquence agencé pour faire varier la vitesse d'entraînement du ventilateur. L'invention concerne un système de ventilation selon la revendication 1. Le système comprend des moyens de mesure de paramètres d'entrée choisis parmi des paramètres caractéristiques climatiques et/ou d'utilisation du bâtiment, ledit système comprenant en outre des moyens de détermination d'une valeur de sortie du module de commande et des moyens de détermination d'une fréquence en fonction de la valeur de sortie.

Le système comprend en outre des premiers moyens de transmission au module de commande de la valeur des paramètres d'entrée, des seconds moyens de transmission au variateur de fréquence de la valeur de sortie et des troisièmes moyens de transmission au ventilateur de la fréquence.

Les premiers moyens de transmission comprennent au moins une voie pour transmettre la valeur du ou des paramètre(s) d'entrée.
Le module de contrôle peut comprendre trois voies de sortie permettant d'envoyer un premier signal hors de l'appareil, ledit premier signal étant fonction des données d'entrée suivant une fonction préétablie.
D'autres caractéristiques et avantages de l'invention apparaîtront à la lumière de la description donnée ci-après et des dessins dans lesquels :
- la figure 1 est une vue schématique des différents composants du système selon un mode de réalisation de l'invention ;
- la figure 2 est un diagramme représentant les différentes étapes effectuées avant les étapes du procédé selon l'invention ; et
- la figure 3 est un diagramme représentant les différentes étapes du procédé selon l'invention.

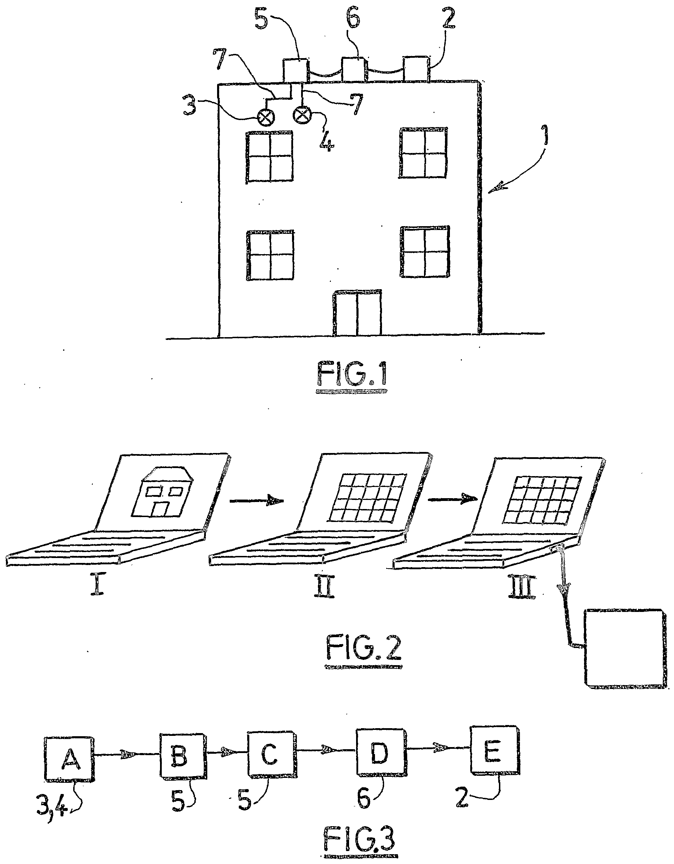

En référence à la figure 1, le bâtiment 1 est équipé d'un système de ventilation de type comprenant un réseau disposant à ses extrémités de buses d'induction équipant des conduits verticaux de ventilation ou d'évacuation de produits de combustion. De tels systèmes sont par exemple décrit dans les documents EP-A-0 878 672 et EP-A-0 329 498.
Dans le mode de réalisation représenté, le système de réglage du ventilateur 2 comprend deux capteurs 3, 4 aptes à capter deux paramètres extérieurs, un module de commande 5 et un variateur de fréquence 6. Le variateur de fréquence 6 est relié au système de ventilation.

Les deux capteurs 3, 4 de paramètres extérieurs sont une sonde de température et un anémomètre destinés à mesurer la température extérieure et la vitesse du vent.

Dans d'autres modes de réalisation non représentés, le système peut comprendre un nombre différent de capteurs aptes à mesurer d'autres paramètres caractéristiques climatiques et/ou d'utilisation du bâtiment.

Les deux capteurs 3, 4 sont reliés par des premiers moyens de transmission 7 - deux fils 7 - au module de commande 5. Dans un autre mode de réalisation, les deux capteurs 3, 4 peuvent être reliés au module de commande 5 par émission de signaux radio.

Le module de commande 5 est un boîtier possédant deux entrées auxquelles sont raccordés les fils 7 en provenance des capteurs 3,4.

Le module de commande 5 comprend dans l'exemple représenté des moyens de stockage de données informatiques et des moyens de compilation.

Le module de commande 5 comprend également trois voies de sorties permettant de transmettre un signal de sortie.

A chaque voie sont associées deux consignes : 0 ou 1 de sorte que le premier signal de sortie peut prendre huit valeurs distinctes.

On pourrait prévoir un nombre de voies de sortie et de valeurs de sorties différent.

On pourrait également prévoir une voie de sortie de type analogique.

Le signal de sortie est transmis au variateur de fréquence 6 selon des moyens connus par l'intermédiaire de seconds moyens de transmission. Le variateur de fréquence 6 est alimenté par le secteur.

Le signal reçu conditionne la fréquence choisie par le variateur de fréquence 6.

Le variateur de fréquence 6 est relié à un ventilateur 2 du système de ventilation par l'intermédiaire de troisièmes moyens de transmission, un câble électrique dans le mode de réalisation représenté.

Le ventilateur 2 est agencé de telle sorte que sa vitesse est proportionnelle à la fréquence du courant.

On décrit maintenant le procédé de réglage du ventilateur 2 selon l'invention.

En référence à la figure 2, une modélisation du bâtiment 1 est effectuée (étape I) sous forme d'un programme informatique.

Le programme tient compte des dimensions du bâtiment 1, du nombre de pièces, des différentes orientations du vent possibles, etc.

Le programme permet de calculer pour un certain nombre de combinaisons de température et de vitesse du vent, quelle doit être la fréquence d'entraînement du ventilateur 2. On peut représenter les résultats sous la forme d'un tableau à double entrée (température / vitesse du vent) (étape II).

Les résultats sont des fréquences de courant, en pratique huit valeurs de fréquences sont possibles.

Le tableau, sous forme de données informatiques, peut alors être entré dans le module de commande 5 et stocké grâce aux moyens de stockage (étape III).

Si des changements interviennent dans l'architecture du bâtiment 1 ou si l'on considère un autre bâtiment, il suffit de modifier le programme et d'entrer le nouveau programme dans le module de commande 5.
L'interface du système de réglage permet une reprogrammation directe de certains paramètres de contrôle et de régulation.
En référence à la figure 3, le procédé selon l'invention se décompose en plusieurs étapes.

Tout d'abord, à l'étape A, les capteurs 3,4 mesurent la température et la vitesse du vent. Un premier signal correspondant à ces mesures est transmis au module de commande 5, en continu ou à intervalles réguliers choisis.
A l'étape B, le signal est reçu par le module de commande 5.
Les valeurs correspondant au signal reçu sont compilées (étape C) grâce aux moyens de calcul qui fournissent une valeur de sortie parmi les huit valeurs possibles.

La valeur de sortie est transmise au variateur de fréquence 6 (étape D) sous la forme d'un second signal comme décrit précédemment.
Au courant reçu par le variateur de fréquence 6 correspond une fréquence du courant triphasé circulant entre le variateur de fréquence 6 et le ventilateur 2.
A l'étape E, le ventilateur 2 tourne à une vitesse d'entraînement dont la fréquence est proportionnelle à la fréquence du courant triphasé de manière à réajuster en proportion l'apport d'air injecté par la buse d'induction par rapport aux apports climatiques agissant sur le tirage thermique naturel.

Une étape de temporisation est prévue entre la mesure de la vitesse du vent et l'entraînement du ventilateur à une vitesse fonction de ladite vitesse du vent. Ainsi, on évite un affolement du système de ventilation en cas de forte bourrasque de vent.

Le procédé de réglage s'applique à des systèmes de ventilation connus.

D'autres modes de fonctionnement de ces systèmes, par exemple sans réglage, restent possibles.

On peut ainsi choisir de faire fonctionner la ventilation à grande vitesse en cas de besoin. La fonction de réglage précédemment décrite est alors arrêtée.

On peut également prévoir de faire passer le ventilateur d'une utilisation commandée par le module de commande à une utilisation en tirage thermique naturel quand les conditions climatiques extérieures définies dans le programme informatique le permettent. Ceci permet de réaliser des économies d'énergie.

La description du système a été faite en prenant exemple sur les paramètres extérieurs de température extérieure et de vitesse du vent, d'autres paramètres peuvent être choisis.

Par exemple, à l'heure des repas, il peut être décidé que la ventilation doit être intensifiée, le réglage adéquat se faisant en fonction de l'heure.

En ce qui concerne la présence d'individus, ce paramètre peut être pris en compte dans le système de réglage de la ventilation.

Dans un mode de réalisation non représenté, la détection des individus peut être réalisée par exemple à l'aide de détecteurs de CO2 ou encore de détecteurs de mouvements à l'aide de rubis à facettes.

Le ventilateur est alors commandé en fonction de l'occupation et/ ou de l'émission de polluants.

Des adaptations en fonction d'autres paramètres climatiques et d'utilisation du bâtiment non décrits ici peuvent être pris en compte dans le fonctionnement du système de réglage selon l'invention.

Egalement dans un mode de réalisation non représenté, on peut prévoir que le système soit contrôlé et/ou piloté à distance par des moyens de transmission d'information hertziens, par modem ou autre (télégestion).

## Revendications

1. Système de ventilation d'un bâtiment, comprenant :
▪ des conduits verticaux de ventilation ou d'évacuation de produits de combustion assurant un tirage thermique naturel,
▪ des buses d'injection d'air situées en partie haute des extrémités des conduits de ventilation ou d'évacuation et permettant, par l'injection d'un débit d'air primaire sous haute vitesse, de créer une dépression en partie supérieure mettant ainsi en mouvement ascensionnel un débit d'air secondaire dans le conduit de ventilation ou d'évacuation,
▪ un ventilateur d'air primaire (2) alimentant un réseau disposant à ses extrémités des buses d'injection, la turbine du ventilateur (2) n'étant pas au contact direct avec le flux d'air à évacuer, le ventilateur (2) étant commandé par un système de réglage,
le système étant tel que:
▪ le système de réglage du ventilateur (2) comprend deux capteurs (3, 4) à savoir une sonde de température (3) et un anémomètre (4) destinés à mesurer les deux paramètres extérieurs que sont la température extérieure et la vitesse du vent,
▪ les deux capteurs (3,4) sont reliés par des premiers moyens de transmission (7) à deux entrées d'un module de commande (5), lequel reçoit des deux capteurs (3, 4) un signal reçu correspondant aux deux paramètres extérieurs mesurés, en continu ou à intervalles choisis,
▪ le module de commande (5) comprend des voies de sortie, un signal de sortie, parmi plusieurs valeurs possibles, étant transmis à un variateur de fréquence (6) par des seconds moyens de transmission,
▪ le programme permet de calculer pour un certain nombre de combinaisons de température extérieure et de vitesse du vent, quelle doit être la fréquence d'entrainement du ventilateur (2) parmi plusieurs valeurs possibles, ces résultats, sous forme de données informatiques, étant entrés dans le module de commande (5) et stockés grâce à des moyens de stockage que ledit module de commande (5) comprend
▪ le variateur de fréquence (6) est relié au ventilateur (2) par l'intermédiaire de troisièmes moyens de transmission et au courant reçu par le variateur de fréquence (6) correspond une fréquence du courant triphasé circulant entre le variateur de fréquence (6) et le ventilateur (2), la vitesse d'entraînement du ventilateur (2) étant proportionnelle à la fréquence du courant triphasé,
▪ une temporisation étant prévue entre la mesure de la vitesse du vent et l'entraînement du ventilateur (2),
▪ de manière à réajuster en proportion l'apport d'air primaire injecté par la buse d'induction par rapport aux apports climatiques agissant sur le tirage thermique naturel ou faire passer le ventilateur (2) d'une utilisation commandée par le module de commande (5) à une utilisation en tirage thermique naturel.

2. Système selon la revendication 1, **caractérisé en ce qu'**il comprend des moyens de mesure de l'activité humaine dans la zone à ventiler de façon à pouvoir commander le ventilateur (2) en fonction de l'occupation et/ou de l'émission de polluants.

3. Système selon l'une des revendications 1 à 2, **caractérisé en ce qu'**il comprend des moyens de réception et de traitement d'information permettant un contrôle et/ou une commande à distance.

4. Système selon l'une des revendications 1 à 3, **caractérisé en ce qu'**il comprend une interface apte à permettre la reprogrammation du système.

## Patentansprüche

1. Belüftungssystem eines Gebäudes, das umfasst:
▪ senkrechte Belüftungs- oder Abzugskanäle von Verbrennungsprodukten, die einen natürlichen Wärmeabzug gewährleisten,
▪ Lufteinspritzdüsen, die sich im oberen Teil der Enden der Belüftungs- oder Abzugskanäle befinden und die Einspritzung eines Primärluftdurchsatzes mit hoher Geschwindigkeit ermöglichen und einen Unterdruck im oberen Teil erzeugen, wodurch ein Sekundärluftdurchsatz im Belüftungs- oder Abzugskanal in eine Aufstiegsbewegung versetzt wird,
▪ ein Primärluftgebläse (2), das ein Netz speist, welches an seinen Enden über Einspritzdüsen verfügt, wobei die Turbine des Gebläses (2) nicht in direktem Kontakt mit dem abzuziehenden Luftstrom steht, wobei das Gebläse (2) von einem Regelungssystem gesteuert wird,
wobei das System so ist, dass:
▪ das Regelungssystem des Gebläses (2) zwei Sensoren (3, 4) umfasst, nämlich einen Temperaturfühler (3) und einen Windmesser (4), die dazu bestimmt sind, die zwei äußeren Parameter zu messen, die die Außentemperatur und die Windgeschwindigkeit sind,
▪ die zwei Sensoren (3, 4) über erste Übertragungsmittel (7) mit zwei Eingängen eines Steuermoduls (5) verbunden sind, das von den zwei Sensoren (3, 4) ein empfangenes Signal empfängt, das den zwei durchgehend oder in gewählten Abständen gemessenen äußeren Parametern entspricht,
▪ das Steuermodul (5) Ausgangspfade umfasst, wobei ein Ausgangssignal unter mehreren möglichen Werten durch zweite Übertragungsmittel an einen Frequenzumrichter (6) übertragen wird,
▪ das Programm es erlaubt eine bestimmte Anzahl von Kombinationen aus Außentemperatur und Windgeschwindigkeit zu berechnen, welches die Antriebsfrequenz des Gebläses (2) unter mehreren möglichen Werten sein soll, wobei diese Ergebnisse in Form von elektronischen Daten in das Steuermodul (5) eingegeben und mit Hilfe von Speichermittel gespeichert werden, die das Steuermodul (5) umfasst,
▪ der Frequenzumrichter (6) über dritte Übertragungsmittel mit dem Gebläse (2) verbunden ist, und dem vom Frequenzumrichter (6) empfangenen Strom eine Frequenz des Dreiphasenstroms entspricht, der zwischen dem Frequenzumrichter (6) und dem Gebläse (2) fließt, wobei die Antriebsgeschwindigkeit des Gebläses (2) proportional zur Frequenz des Dreiphasenstroms ist,
▪ eine Verzögerung zwischen der Messung der Windgeschwindigkeit und des Antriebs des Gebläses (2) vorgesehen ist,
▪ um die von der Induktionsdüse eingespeiste Primärluftzufuhr proportional bezüglich der wetterbedingten Zufuhren anzupassen, die auf den natürlichen Wärmeabzug einwirken, oder das Gebläse (2) von einer vom Steuermodul (5) gesteuerten Verwendung zu einer Verwendung mit natürlichem Wärmeabzug übergehen zu lassen.

2. System nach Anspruch 1, **dadurch gekennzeichnet, dass** es Mittel zur Messung einer menschlichen Tätigkeit in der zu belüftenden Zone umfasst, um das Gebläse (2) abhängig von der Beschäftigung und/oder der Schadstoffemission steuern zu können.

3. System nach einem der Ansprüche 1 bis 2, **dadurch gekennzeichnet, dass** es Mittel zum Empfang und zur Verarbeitung von Informationen umfasst, die eine Fernkontrolle und/oder -steuerung erlauben.

4. System nach einem der Ansprüche 1 bis 3, **dadurch gekennzeichnet, dass** es eine Schnittstelle umfasst, die die Neuprogrammierung des Systems erlaubt.

## Claims

1. Ventilation system for a building, comprising:
▪ vertical ventilation or discharge ducts for combustion products providing a natural thermal draft,
▪ air injection nozzles located at the upper part of the ends of the ventilation or discharge ducts and, by injecting a primary air flow at high speed, enabling a negative pressure to be generated at the upper part, thereby causing a secondary air flow to move upwards through the ventilation or discharge duct,
▪ a primary air fan (2) supplying a network having injection nozzles at its ends, the impeller of the fan (2) not being in direct contact with the air flow to be discharged, the fan (2) being controlled by a control system,
the system being such that:
▪ the control system of the fan (2) comprises two sensors (3, 4), namely a temperature sensor (3) and an anemometer (4) configured to measure two outdoor parameters, namely the outdoor temperature and speed of the wind,
▪ the two sensors (3,4) being connected by first transmission means (7) to two inputs of a control module (5) which receives from the two sensors (3, 4) a received signal corresponding to the two measured outdoor parameters, either continuously or at selected intervals,
▪ the control module (5) comprises output channels, an output signal having one of several possible values being transmitted to a frequency converter (6) by second transmission means,
▪ the programme enables a calculation to be run to establish what the driving frequency of the fan (2) should be from a number of possible values based on a certain number of outdoor temperature and wind speed combinations, these results, in the form of computer data, being input to the control module (5) and stored by storage means incorporated in said control module (5),
▪ the frequency converter (6) is connected to the fan (2) via third transmission means and a frequency of the three-phase current circulating between the frequency converter (6) and fan (2) corresponds to the current received by the frequency converter (6), the driving speed of the fan (2) being proportional to the frequency of the three-phase current,
▪ a time delay being provided between the measurement of the wind speed and driving of the fan (2)
▪ in order to adjust by proportion the amount of primary air injected by the induction nozzle relative to the climatic factors acting on the natural thermal draft or to switch the fan (2) from an operating mode controlled by the control module (5) to a mode using the natural thermal draft.

2. System as claimed in claim 1, **characterised in that** it comprises means for measuring human activity in the area to be ventilated to enable the fan (2) to be controlled as a function of occupancy and/or the emission of pollutants.

3. System as claimed in one of claims 1 to 2, **characterised in that** it comprises means for receiving and processing information enabling monitoring and/or remote control.

4. System as claimed in one of claims 1 to 3, **characterised in that** it comprises an interface configured to enable the system to be re-programmed.
